(19) Europäisches Patentamt
European Patent Office
Office européen des brevets

(11) **EP 3 791 131 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **19713687.2**

(22) Anmeldetag: **13.03.2019**

(51) Internationale Patentklassifikation (IPC):
**G01B 21/20** *(2006.01)*  **G01B 17/06** *(2006.01)*

(52) Gemeinsame Patentklassifikation (CPC):
**G01B 17/06**

(86) Internationale Anmeldenummer:
**PCT/DE2019/100222**

(87) Internationale Veröffentlichungsnummer:
**WO 2019/214765 (14.11.2019 Gazette 2019/46)**

(54) **VERFAHREN UND MESSVORRICHTUNG ZUM VERMESSEN EINES GEWINDES**

METHOD AND MEASURING APPARATUS FOR MEASURING A THREAD

PROCÉDÉ ET DISPOSITIF DE MESURE DESTINÉS À MESURER UN FILETAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2018 DE 102018111108**

(43) Veröffentlichungstag der Anmeldung:
**17.03.2021 Patentblatt 2021/11**

(73) Patentinhaber: **Schaeffler Technologies AG & Co. KG**
**91074 Herzogenaurach (DE)**

(72) Erfinder:
• PSCHYKLENK, Michael
  91740 Röckingen (DE)
• MEWS, Martin
  90763 Fürth (DE)
• SCHMIDT-KORTH, Martin
  90459 Nürnberg (DE)

(56) Entgegenhaltungen:
**DE-A1- 19 613 173    JP-A- S6 227 607**

**Beschreibung**

Die Erfindung betrifft ein Verfahren und eine Messvorrichtung, mit dessen Hilfe ein Gewinde vermessen werden kann.

Es ist bekannt die Spindel eines Kugelgewindetriebs mit einem taktilen Messtaster abzutasten, um die Eigenschaften der Spindel, insbesondere die Position und Gewindelage des Gewindes in der Spindel, zu überprüfen.

Die DE 196 13 173 A1 offenbart ein Verfahren und eine Vorrichtung zur optoelektronischen Gewinnung von Gewindeparametern aus Konturpunkten von Außengewinden.

Die JP S62 27607 A beschreibt ein Verfahren zur Messung der Genauigkeit von Gewinden.

Es besteht ein ständiges Bedürfnis das Vermessen eines Gewindes zu beschleunigen.

Es ist die Aufgabe der Erfindung Maßnahmen aufzuzeigen, die eine schnelle Vermessung eines Gewindes ermöglichen.

Die Lösung der Aufgabe erfolgt erfindungsgemäß durch ein Verfahren mit den Merkmalen des Anspruchs 1 und einer Messvorrichtung mit den Merkmalen des Anspruchs 9. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Verfahren zum Vermessen eines Gewindes, insbesondere einer Spindel eines Kugelgewindetriebs, vorgesehen, bei dem ein berührungsloser Abstandssensor parallel zur Axialrichtung des Gewindes verfahren wird, ein zum Abstand des Abstandssensors zur Oberseite des Gewindes korrespondierendes Messsignal erfasst wird, Schnittpunkte des Messsignals mit einem zwischen einem Maximalwert und einem Minimalwert des Messsignals liegenden Referenzwert erfasst werden, zwei einander unmittelbar nachfolgende Schnittpunkte in ein erstes Messwertetupel und zwei dem ersten Messwertetupel unmittelbar nachfolgende einander unmittelbar nachfolgende Schnittpunkte in ein zweites Messwertetupel zusammengefasst werden, aus den Schnittpunkten des ersten Messwertetupels ein erster Mittelwert und aus den Schnittpunkten des zweiten Messwertetupels ein zweiter Mittelwert berechnet werden und aus dem ersten Mittelwert und dem zweiten Mittelwert eine Zeit/Winkel-Auflösung berechnet wird.

Da die Vermessung des Gewindes berührungslos, beispielsweise mit Hilfe von Ultraschall, und nicht berührungsbehaftet erfolgt, kann der Messvorgang bereits signifikant beschleunigt werden. Zudem werden keine absoluten Werte des Gewindes gemessen. Die Messung der exakten Position eines Fußgrundes des Gewindes ist schwierig und fehleranfällig. Hierzu müsste zudem in dem Messsignal ein dem Fußgrund entsprechender Extremwert ermittelt werden, wozu mehrere Rechenschritte erforderlich sind. Ein Zwischenbereich zwischen zwei Gewindegängen weist eine signifikante Erstreckung in axialer Richtung auf, so dass der dem Zwischenbereich entsprechende Messwert auf einem Plateau liegt. Dieser Messwert ist daher schlecht aufgelöst. Zudem kann der Anfang und das Ende des Zwischenbereichs zwischen nachfolgenden Gewindegängen gegebenenfalls nicht exakt bestimmt werden, wodurch sich aus der Bestimmung des Zwischenbereichs signifikante Ungenauigkeiten ergeben. Bei dem Verfahren werden stattdessen die Schnittpunkte der sich aus den Messwerten ergeben Messkurve mit einem Referenzwert ermittelt. Sofern der Referenzwert zwischen einem bei der Messung auftretenden Maximalwert und einem bei der Messung auftretenden Minimalwert liegt, kann der Referenzwert grundsätzlich im Wesentlichen beliebig gewählt werden. Hierbei wird die Erkenntnis ausgenutzt, dass die Flanken der Gewindegänge des Gewindes im Wesentlichen symmetrisch ausgestaltet sind. Das bedeutet, dass ein Mittelpunkt zwischen zwei auf der selben Höhe angeordneten Punkten einander gegenüberliegender Flanken des selben Gewindegangs sehr genau dem Fußgrund des Gewindegangs entspricht. Ebenso liegt ein Mittelpunkt zwischen zwei auf der selben Höhe angeordneten Punkten voneinander weg weisender Flanken von nachfolgenden Gewindegängen sehr genau in der Mitte des Zwischenbereich zwischen den Gewindegängen. Hierbei ist es prinzipiell unerheblich auf welcher Höhe des Gewindegangs diese dem Referenzwert entsprechenden Punkte liegen. Zur Bestimmung dieser Mittelpunkte werden jeweils paarweise die Messwerte, die zu dem Referenzwert des Abstandssensors führen, einem Messwertetupel zugeführt, wobei die jeweiligen einander nachfolgende Messwertetupel jeweils zwei dem Referenzwert entsprechende einander nachfolgende Messwerte aufweisen, die den Schnittpunkt der Messwertekurve mit dem Referenzwert darstellen. Aus den jeweiligen nachfolgenden Messwertetupel wird jeweils der Mittelwert bestimmt. Der Abstand des ersten Mittelwerts zum zweiten Mittelwert entspricht dem Abstand der in axialer Richtung nachfolgenden Gewindegänge. Zudem ist von dem untersuchten Gewinde die Gangzahl bekannt, so dass der axiale Abstand der Gewindegänge unter Berücksichtigung der Gangzahl einem bestimmten Drehwinkelbetrag des Gewindes entspricht. Die Spindel eines Kugelgewindetriebes ist in der Regel eingängig, so dass eine Drehung der Spindel um 360° einem Vorschub in Höhe des axialen Abstand der nachfolgenden Gewindegänge entspricht. Zusätzlich sind aus der Messung des Abstandssensors und der der sich daraus ergeben Messkurve die Messzeitpunkte der Schnittpunkte mit dem Referenzwert bekannt, so dass aus deren Mittelung auch der zeitliche Abstand der Mittelwerte bekannt ist. Daraus lässt sich dann die Zeit/Winkel-Auflösung berechnen. Wenn beispielsweise zusätzlich die Verfahrgeschwindigkeit und/oder der Verfahrweg des Abstandssensors bekannt ist und/oder gemessen wird, kann daraus mit Hilfe der berechneten Zeit/Winkel-Auflösung die Gewindesteigung des Gewindes oder weitere Eigenschaften des Gewindes bestimmt werden. Durch die berührungslose Messung der Flanken der Gewindegänge des Gewindes auf einer gemeinsamen Höhe können schnell und präzise Eigenschaften des Gewindes vermessen werden, so dass eine schnelle Vermessung eines Gewindes ermöglicht ist.

Die Messwertetupel überschneiden sich nicht. Das heißt, dass sämtliche den Schnittpunkt mit dem Referenzwert bildende Messwerte auf unterschiedliche Messwertetupel aufgeteilt werden. Hierbei schließt sich das zweite Messwertetupel unmittelbar an dem ersten Messwertetupel an, so dass zwischen nachfolgenden Messwertetupeln kein Schnittpunkt verbleibt, der nicht einem Messwertetupel zugeordnet ist. Dadurch ist sichergestellt, dass in jedem Messwertetupel gleichartige Messwerte vorhanden sind, die entweder der fallenden und der ansteigenden Flanke eines gemeinsamen Gewindegangs oder der ansteigenden Flanke und der fallenden Flanke verschiedener nachfolgender Gewindegänge entsprechen. Bei einem mergängigen Gewinde werden vorzugsweise Messwertetupel miteinander verglichen, die dem selben Gewindegang zugeordnet sind. Vorzugsweise wird jeder unabhängiger Gewindegang separat vermessen, besonders bevorzugt um daraus die Teilung des mehrgängigen Gewindes zu ermitteln. Aufgrund der schnellen Vermessung des Gewindes ist es insbesondere möglich die Gewinde in einem Mehrspindeldrehautomaten herzustellen und während oder nach der Fertigung zu vermessen, ohne dass die Stückzeiten signifikant ansteigen.

Insbesondere werden die Messwerte in Abhängigkeit von einer Messzeit ab einem Startzeitpunkt oder in Abhängigkeit von einer axialen Verlagerung ab einem Startort ermittelt. Die von dem Abstandssensor ermittelte Messkurve kann zeitaufgelöst ermittelt werden, das heißt ein Messwert des Abstandssensors, beispielsweise eine Spannung, ist als Funktion der Zeit aufgetragen. Alternativ ist es möglich die Messkurve ortsaufgelöst bereitzustellen, das heißt ein Messwert des Abstandssensors, beispielsweise eine Spannung, ist als Funktion des axialen Messwegs des Abstandssensors aufgetragen. Wenn der Abstandssensor sowieso mit einer konstanten Verfahrgeschwindigkeit axial verlagert wird, kann es einfacher sein, die Messwerte in Abhängigkeit von der Messzeit zu ermitteln. Falls die Verfahrgeschwindigkeit während der Messung, beispielsweise durch externe Störungen oder bei Messproblemen, variieren kann, kann die Messgenauigkeit leichter beibehalten werden, wenn die Messwerte in Abhängigkeit von der axialen Verlagerung ermittelt werden.

Vorzugsweise wird die Zeit/Winkel-Auflösung aus einer Mittelung mehrerer Mittelwerte von mehr als zwei unmittelbar nachfolgenden Messwertetupeln berechnet. Durch die Einbeziehung mehrere Mittelwerte mehrerer Messwertetupel können entsprechend viele Abstände nachfolgender Gewindegänge und/oder der Abstand von über eine bestimmte Anzahl von betrachteten Messwertetupeln beabstandete Gewindegänge berücksichtigt werden. Durch die vielen berücksichtigten Mittelwerte kann die Genauigkeit der aus der Mittelung der Mittelwerte bestimmten Zeit/Winkel-Auflösung verbessert werden.

Besonders bevorzugt weist das jeweilige Messwertetupel einen einer ansteigenden Flanke eines Gewindegangs zugeordneten Schnittpunkt und einen einer fallenden Flanke eines nachfolgenden Gewindegangs zugeordneten Schnittpunkt auf. Der Mittelwert des jeweiligen Messwertetupels entspricht dadurch der Mitte des Zwischenbereichs zwischen zwei in axialer Richtung nachfolgenden Gewindegängen. Da der Mittelbereich in der Regel eine deutlich größere axiale Erstreckung als die Gewindegangbreite aufweist, wirken sich in der Auflösungsgenauigkeit des Abstandssensors begründete Messungenauigkeiten weniger stark aus. Die Genauigkeit der Vermessung des Gewindes ist dadurch verbessert.

Insbesondere wird die Messung des Abstandssensors durch einen in Längsrichtung des Gewindes ortsfesten Trigger ausgelöst. Dadurch ergibt sich ein zeitlich und/oder örtlich genau definierter Startpunkt für die Messung des Abstandssensors. Dies ermöglicht es insbesondere verschiedene Messungen des selben Gewindes miteinander und/oder mit einer Referenzmessung zu vergleichen. Zudem kann die axiale Relativlage des Gewindes, beziehungsweise der axiale Anfang und/oder das axiale Ende des Gewindes zu einer definierten Referenz vermessen und überprüft werden. Die Steigung und/oder Steigungsfehler des Gewindes können jedoch auch ohne den ortsfesten Trigger bestimmt werden.

Insbesondere wird aus einem Versatz der Mittelwerte zu Mittelwerten einer Referenzmessung ein Winkelversatz des Gewindes in Umfangsrichtung zu einer Referenzwinkellage eines Gewindes der Referenzmessung berechnet. Wenn das zu vermessende Gewinde zu der Referenzmessung um einen Winkelbetrag verdreht ist, sind die jeweiligen Gewindegänge in axialer Richtung etwas versetzt positioniert. Dadurch erfolgt auch ein Schnittpunkt der Messkurve mit dem Referenzwert mit einer zeitlichen und örtlichen Phasenverschiebung. Aus dieser Phasenverschiebung kann wiederum auf den Winkelversatz des Gewindes zu der Referenzmessung und/oder einer damit verbundenen Referenzwinkellage geschlossen werden. Ein unerwünschter Winkelversatz kann rückgängig gemacht werden und/oder für nachfolgende Schritte berücksichtigt werden. Dies ermöglicht es ein für einen Kugelgewindetrieb vorgesehenes Gewinde sehr exakt in einer gewünschten Relativwinkellage zu einer Spindelmutter zu montieren, wodurch die Präzision des Kugelgewindetriebs verbessert sein kann. Insbesondere ist es dadurch möglich während der Herstellung des Gewindes, insbesondere einer Spindel eines Kugelgewindetriebs, eine gewünschte Winkellage einzustellen und/oder zu positionieren.

Vorzugsweise wird eine Verfahrgeschwindigkeit und/oder ein Verfahrweg und/oder eine Verfahrzeit des Abstandssensors ermittelt, wobei aus dem Abstand des ersten Mittelwerts zu dem zweiten Mittelwert und/oder aus einer Mittelung des Abstands mehrerer einander nachfolgender Mittelwerte eine Gewindesteigung des Gewindes berechnet wird. Durch die Berücksichtigung des Bewegungsverhaltens des Abstandssensors können aus der Messkurve weitere Eigenschaften des Gewindes vermessen und überprüft werden. Insbesondere kann dadurch die Gewindesteigung und/oder bei einem mehrgängigen Gewinde die Teilung berechnet werden.

Besonders bevorzugt wird das Gewinde einer Spindel eines Kugelgewindetriebs vermessen. Durch die genaue Vermessung und Überprüfung des Gewindes kann das Gewinde höchsten Präzisionsansprüchen genügen. Dies ermöglicht es mit hohen Herstellungsgeschwindigkeiten Gewinde für Kugelgewindetriebe herzustellen, die insbesondere in Werkzeugmaschinen und Hochpräzisionsanwendungen eingesetzt werden können. Eine bestimmte Linearstellung des Kugelgewindetriebs kann mit einer hohen Präzision angesteuert werden.

Die Erfindung betrifft ferner eine Messvorrichtung zum Vermessen eines Gewindes, insbesondere einer Spindel eines Kugelgewindetriebs, mit einer Halteeinrichtung zum Festhalten eines Gewindes, einem parallel zur Axialrichtung des Gewindes verfahrbaren berührungslosen Abstandssensor und einer Auswerteeinrichtung zur Auswertung des von dem Abstandssensors detektierten Messsignals, wobei die Auswerteeinrichtung zur Durchführung des Verfahrens, das wie vorstehend beschrieben aus- und weitergebildet sein kann, ausgestaltet ist. Durch die berührungslose Messung der Flanken der Gewindegänge des Gewindes auf einer gemeinsamen Höhe können schnell und präzise Eigenschaften des Gewindes vermessen werden, so dass eine schnelle Vermessung eines Gewindes ermöglicht ist.

Nachfolgend wird die Erfindung unter Bezugnahme auf die anliegende Zeichnung anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können. Es zeigt:

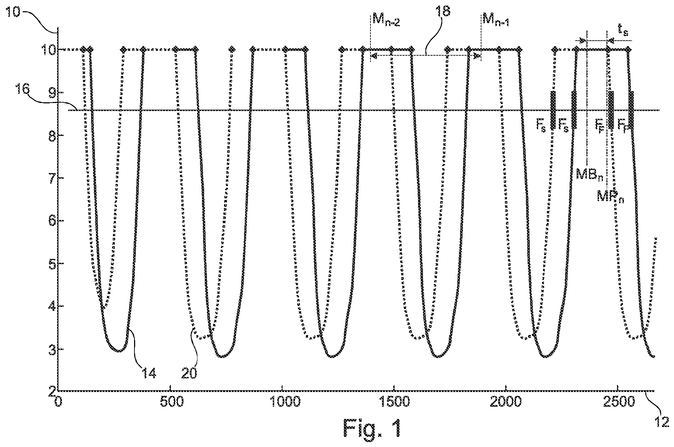

Fig. 1: ein schematisches Diagramm von mit einem Verfahren zum Vermessen eines Gewindes erhaltenen Messkurven.

In dem in Fig. 1 dargestellten Diagramm ist der eine Spannung in V darstellende Messwert eines berührungslosen Abstandssensors in Abhängigkeit von einer Messzeit 12 in s dargestellt. Die Messwerte des Abstandssensors ergeben eine Messkurve 14, die im Wesentlichen dem Verlauf eines zu vermessenden Gewindes entlang einer axialen Linie entspricht. Die Messkurve 14 schneidet einen Referenzwert 16, der nahezu beliebig zwischen einem Maximalwert und einem Minimalwert der Messkurve 14 liegt. Die Messkurve 14 schneidet den Referenzwert 16 bei einer ansteigenden Flanke eines Gewindegangs mit einer positiven Steigung in einem ersten Schnittpunkt Fs und bei einer abfallend Flanke des Gewindegangs mit einer negativen Steigung in einem zweiten Schnittpunkt $F_F$. Diese beiden Schnittpunkte $F_S$ und $F_F$ bilden ein Messwertetupel, aus dem ein Mittelwert $M_n$ gebildet wird, beispielsweise gemäß

$$M_n = \frac{F_F(n+1) - F_S(n)}{2} + F_S(n)$$

wobei n der n-te betrachtete Gewindegang des Gewindes ist. Bei einer Gesamtanzahl von N betrachteten Gewindegängen, die in axialer Richtung hintereinander folgen, ergibt sich für ein eingängiges Gewinde bei einer Mittelung über die betrachteten Gewindegänge eine Zeit/Winkel-Auflösung ZW von

$$ZW = \frac{1}{N-1} \cdot \sum_{n=1}^{N-1} \frac{M_{n+1} - M_n}{360°}.$$

Aus dem Abstand von zwei nachfolgenden Mittelwerten, beispielsweise $M_n$ und $M_{n+1}$, kann, insbesondere für ein eingängiges Gewinde, eine Gewindesteigung 18 bestimmt werden. Dies ist in dem dargestellten Diagramm zur besseren Übersichtlichkeit exemplarisch an den Mittelwerten $M_{n-1}$ und $M_{n-2}$ dargestellt. Zudem kann die Messkurve 14 mit einer Referenzkurve 20 verglichen werden. Wenn das Gewinde bei der Messung um einen Winkelbetrag zu der Winkellage des Gewindes der Referenzkurve 20 verdreht ist, ergibt sich eine zeitliche Phasendifferenz $t_s$ zwischen dem Mittelwert $MP_n$ der Messkurve 14 und dem dazu korrespondierenden Mittelwert $MB_n$ der Referenzkurve 20, gemäß

$$t_s = t(MB_n) - t(MP_n).$$

Daraus lässt sich wiederum ein Winkelversatz $\Delta\varphi$ zwischen der Winkellage des Gewindes der Messkurve 14 zu der Winkellage des Gewindes der Referenzkurve 20 in Umfangsrichtung bestimmten, gemäß

$$\Delta\varphi = t_s \cdot ZW.$$

### Bezugszeichenliste

| 10 | Spannung |
|----|----------|
| 12 | Messzeit |
| 14 | Messkurve |
| 16 | Referenzwert |
| 18 | Gewindesteigung |
| 20 | Referenzkurve |
| ZW | Zeit/Winkel-Auflösung |
| $F_S$ | Schnittpunkt steigende Flanke |

$F_F$      Schnittpunkt fallende Flanke
$M_n$      Mittelwert
$MP_n$      Mittelwert der Messkurve
$MB_n$      Mittelwert der Referenzkurve
$t_s$      Phasendifferenz
$\Delta\varphi$      Winkelversatz

**Patentansprüche**

1. Verfahren zum Vermessen eines Gewindes, insbesondere einer Spindel eines Kugelgewindetriebs, bei dem

   ein berührungsloser Abstandssensor parallel zur Axialrichtung des Gewindes verfahren wird,
   ein zum Abstand des Abstandssensors zur Oberseite des Gewindes korrespondierendes Messsignal (14) erfasst wird,
   Schnittpunkte ($F_F$, $F_L$) des Messsignals (14) mit einem zwischen einem Maximalwert und einem Minimalwert des Messsignals (14) liegenden Referenzwert (16) erfasst werden,
   zwei einander unmittelbar nachfolgende Schnittpunkte ($F_S$, $F_F$) in ein erstes Messwertetupel und zwei dem ersten Messwertepaar unmittelbar nachfolgende einander unmittelbar nachfolgende Schnittpunkte ($F_S$, $F_F$) in ein zweites Messwertetupel zusammengefasst werden,
   aus den Schnittpunkten ($F_S$, $F_F$) des ersten Messwertetupels ein erster Mittelwert ($M_{n-2}$) und aus den Schnittpunkten ($F_S$, $F_F$) des zweiten Messwertetupels ein zweiter Mittelwert ($M_{n-1}$) berechnet werden und
   aus dem ersten Mittelwert ($M_{n-2}$) und dem zweiten Mittelwert ($M_{n-1}$) eine Zeit/WinkelAuflösung (ZW) berechnet wird.

2. Verfahren nach Anspruch 1, bei dem die Messwerte (14) in Abhängigkeit von einer Messzeit (12) ab einem Startzeitpunkt oder in Abhängigkeit von einer axialen Verlagerung ab einem Startort ermittelt werden.

3. Verfahren nach Anspruch 1 oder 2, bei dem die Zeit/Winkel-Auflösung (ZW) aus einer Mittelung mehrerer Mittelwerte ($M_n$) von mehr als zwei unmittelbar nachfolgenden Messwertetupeln berechnet wird.

4. Verfahren nach einem der Ansprüche 1 bis 3, bei dem das jeweilige Messwertetupel einen einer ansteigenden Flanke eines Gewindegangs zugeordneten Schnittpunkt ($F_S$) und einen einer fallenden Flanke eines nachfolgenden Gewindegangs zugeordneten Schnittpunkt ($F_F$) aufweist.

5. Verfahren nach einem der Ansprüche 1 bis 4, bei dem die Messung des Abstandssensors durch einen in Längsrichtung des Gewindes ortsfesten Trigger ausgelöst wird.

6. Verfahren nach einem der Ansprüche 1 bis 5, bei dem aus einem Versatz der Mittelwerte ($MP_n$) zu Mittelwerten ($MB_n$) einer Referenzmessung (20) ein Winkelversatz ($\Delta\varphi$) des Gewindes in Umfangsrichtung zu einer Referenzwinkellage eines Gewindes der Referenzmessung (20) berechnet wird.

7. Verfahren nach einem der Ansprüche 1 bis 6, bei dem eine Verfahrgeschwindigkeit und/oder ein Verfahrweg und/oder eine Verfahrzeit des Abstandssensors ermittelt wird, wobei aus dem Abstand des ersten Mittelwerts ($M_{n-2}$) zu dem zweiten Mittelwert ($M_{n-1}$) und/oder aus einer Mittelung des Abstands mehrerer einander nachfolgender Mittelwerte ($M_n$) eine Gewindesteigung (18) des Gewindes berechnet wird.

8. Verfahren nach einem der Ansprüche 1 bis 7, bei dem das Gewinde einer Spindel eines Kugelgewindetriebs vermessen wird.

9. Messvorrichtung zum Vermessen eines Gewindes, insbesondere einer Spindel eines Kugelgewindetriebs, mit

   einer Halteeinrichtung zum Festhalten eines Gewindes,
   einem parallel zur Axialrichtung des Gewindes verfahrbaren berührungslosen Abstandssensor und
   einer Auswerteeinrichtung zur Auswertung des von dem Abstandssensors detektierten Messsignals (14),
   wobei die Auswerteeinrichtung zur Durchführung des Verfahrens nach einem der Ansprüche 1 bis 8 ausgestaltet ist.

**Claims**

1. A method for measuring a thread, in particular a spindle of a ball screw drive, in which

   a contactless distance sensor is moved in parallel to the axial direction of the thread,
   a measurement signal (14) corresponding to the distance between the distance sensor and the top of the thread is recorded,
   intersection points ($F_F$, $F_L$) of the measurement signal (14) with a reference value (16) lying between a maximum value and a minimum value of the measurement signal (14) are recorded,
   two directly subsequent intersection points ($F_S$, $F_F$) are combined into a first measured value tuple and two directly subsequent intersection points ($F_S$, $F_F$) immediately following the first measured value pair are combined into a second measured value tuple,

a first mean value ($M_{n-2}$) from the intersection points ($F_S$, $F_F$) of the first measured value tuple and a second mean value ($M_{n-1}$) from the intersection points ($F_S$, $F_F$) of the second measured value tuple are calculated, and

a time/angle resolution (ZW) is calculated from the first mean value ($M_{n-2}$) and the second mean value ($M_{n-1}$).

2. The method according to claim 1, in which the measured values (14) are determined as a function of a measurement time (12) from a starting point in time or as a function of an axial displacement from a starting point.

3. The method according to claim 1 or 2, in which the time/angle resolution (ZW) is calculated from an averaging of a plurality of mean values ($M_n$) of more than two directly subsequent measured value tuples.

4. The method according to any one of claims 1 to 3, in which the respective measured value tuple has an intersection point ($F_S$) assigned to a rising flank of a thread turn and an intersection point ($F_F$) assigned to a falling flank of a subsequent thread turn.

5. The method according to any one of claims 1 to 4, in which the measurement of the distance sensor is triggered by a trigger which is stationary in the longitudinal direction of the thread.

6. The method according to any one of claims 1 to 5, in which, from an offset of the mean values ($MP_n$) to mean values ($MB_n$) of a reference measurement (20), an angular offset ($\Delta\varphi$) of the thread in the circumferential direction to a reference angular position of a thread of the reference measurement (20) is calculated.

7. The method according to any one of claims 1 to 6, in which a travel speed and/or a travel distance and/or a travel time of the distance sensor is determined, wherein a thread pitch (18) of the thread is calculated from the distance between the first mean value ($M_{n-2}$) and the second mean value ($M_{n-1}$) and/or from an averaging of the distance between several successive mean values ($M_n$).

8. The method according to any one of claims 1 to 7, in which the thread of a spindle of a ball screw drive is measured.

9. A measuring apparatus for measuring a thread, in particular a spindle of a ball screw drive, having

a holding device for holding a thread,
a contactless distance sensor that can be moved in parallel to the axial direction of the thread, and
an evaluation device for evaluating the measurement signal (14) detected by the distance sensor,
wherein the evaluation device is designed to carry out the method according to any one of claims 1 to 8.

**Revendications**

1. Procédé destiné à mesurer un filetage, en particulier d'une tige d'une vis à billes, dans lequel

un capteur de distance sans contact est déplacé parallèlement à la direction axiale du filetage,
un signal de mesure (14) correspondant à la distance du capteur de distance par rapport à la partie supérieure du filetage est enregistré,
des points d'intersection ($F_F$, $F_L$) du signal de mesure (14) avec une valeur de référence (16) comprise entre une valeur maximale et une valeur minimale du signal de mesure (14) sont enregistrés,
deux points d'intersection ($F_S$, $F_F$) immédiatement consécutifs dans un premier tuple de valeurs mesurées et deux points d'intersection ($F_S$, $F_F$) se suivant immédiatement l'un l'autre immédiatement après la première paire de valeurs mesurées sont combinés en un second tuple de valeurs mesurées,
à partir des points d'intersection ($F_S$, $F_F$) du premier tuple de valeurs mesurées, une première valeur moyenne ($M_{n-2}$) et, à partir des points d'intersection ($F_S$, $F_F$) du second tuple de valeurs mesurées, une seconde valeur moyenne ($M_{n-1}$) peuvent être calculées et
une résolution temps/angle (TA) est calculée à partir de la première valeur moyenne ($M_{n-2}$) et de la seconde valeur moyenne ($M_{n-1}$).

2. Procédé selon la revendication 1, dans lequel les valeurs mesurées (14) sont déterminées en fonction d'un temps de mesure (12) à partir d'un point de départ temporel ou en fonction d'un déplacement axial à partir d'un point de départ.

3. Procédé selon la revendication 1 ou 2, dans lequel la résolution temps/angle (TA) est calculée en moyennant plusieurs valeurs moyennes ($M_n$) de plus de deux tuples de valeurs mesurées immédiatement consécutifs.

4. Procédé selon l'une quelconque des revendications 1 à 3, dans lequel le tuple de valeurs mesurées respectif présente un point d'intersection ($F_S$) associé

à un flanc ascendant d'un tour de filetage et un point d'intersection ($F_F$) associé à un flanc descendant d'un tour de filetage consécutif.

5. Procédé selon l'une quelconque des revendications 1 à 4, dans lequel la mesure du capteur de distance est déclenchée par une gâchette fixe dans le sens longitudinal du filetage.

6. Procédé selon l'une quelconque des revendications 1 à 5, dans lequel un décalage angulaire ($\Delta\varphi$) du filetage dans la direction circonférentielle par rapport à une position angulaire de référence d'un filetage de la mesure de référence (20) est calculé à partir d'un décalage des valeurs moyennes ($MP_n$) par rapport aux valeurs moyennes ($MB_n$) d'une mesure de référence (20).

7. Procédé selon l'une quelconque des revendications 1 à 6, dans lequel une vitesse de déplacement et/ou une course de déplacement et/ou un temps de déplacement du capteur de distance sont déterminés, un pas (18) du filetage étant calculé à partir de la distance entre la première valeur moyenne ($M_{n-2}$) et la seconde valeur moyenne ($M_{n-1}$) et/ou en moyennant la distance de plusieurs valeurs moyennes ($M_n$) consécutives.

8. Procédé selon l'une quelconque des revendications 1 à 7, dans lequel le filetage d'une tige d'une vis à billes est mesuré.

9. Dispositif de mesure destiné à mesurer un filetage, en particulier d'une tige d'une vis à billes, comprenant

un dispositif de retenue pour fixer un filetage,
un capteur de distance sans contact pouvant se déplacer parallèlement à la direction axiale du filetage et
un dispositif d'évaluation destiné à évaluer le signal de mesure (14) détecté par le capteur de distance,
le dispositif d'évaluation étant conçu pour mettre en œuvre le procédé selon l'une quelconque des revendications 1 à 8.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19613173 A1
- JP S6227607 A